# EUROPÄISCHE PATENTSCHRIFT

(11) **EP 2 058 161 B1**
(45) Veröffentlichungstag und Bekanntmachung des Hinweises auf die Patenterteilung: **09.12.2015**
(21) Anmeldenummer: 08005408.3
(22) Anmeldetag: 22.03.2008
(51) Int. Cl.: B60K 15/03, B01D 53/88

(54) **Kraftstoffbehälter**
Fuel container
Récipient de combustible

(30) Priorität: 06.11.2007 DE 102007053227
(43) Veröffentlichungstag der Anmeldung: 13.05.2009
(73) Patentinhaber: MAGNA STEYR Fuel Systems GmbH Werk Schwäbisch Gmünd, 73529 Schwäbisch-Gmünd (DE)
(72) Erfinder: Klein, Steffen, 73525 Schwäbisch Gmünd (DE)
(74) Vertreter: Rausch, Gabriele

(56) Entgegenhaltungen:
- EP-A- 1 736 350
- WO-A-99/02825
- WO-A-2005/044611
- DE-A1- 4 123 974
- DE-C1- 19 740 471
- DE-U1- 20 306 793
- DE-U1-202006 002 035
- GB-A- 2 328 915

## Beschreibung

Die Erfindung betrifft einen Kraftstoffbehälter für Nutzfahrzeuge gemäß dem Oberbegriff von Anspruch 1. Die Erfindung betrifft auch die Verwendung eines Moduls eines Kraftstoffbehälters nach Anspruch 22.

Ein derartiger Kraftstoffbehälter ist aus der DE 10 2006 054 208.8 bekannt.

Die WO 9902825 offenbart einen Kraftstoffbehälter nach dem Oberbegriff des Anspruchs 1.

Herkömmliche Kraftstoffbehälter weisen eine Umfangswandung auf, welche wenigstens einen Innenraum zur Aufnahme eines flüssigen oder gasförmigen Mediums ausbildet. Die Umfangswandung setzt sich dabei aus einer im wesentlichen rohrförmigen Hülle zusammen, welche an den offenen Enden durch Stirnwandungen verschlossen ist. Derartige Kraftstoffbehälter sind aus der DE 202 08 040 A1 bekannt.

Es sind jedoch auch Kraftstoffbehälter bekannt, die sich aus einem oder mehreren hülsenförmigen Teilen zusammensetzen.

Kraftstoffbehälter für Nutzfahrzeuge sind in der Regel aus Edelstahl, Stahl, Aluminium oder entsprechenden Legierungen hergestellt. Bekannt sind auch Kraftstoffbehälter, deren Umfangswandungen vollständig aus Kunststoff gebildet sind.

Aus der Praxis ist es bekannt, den Kraftstoffbehälter zusätzlich zu einem Einfüllstutzen mit verschiedenen Funktionselementen, beispielsweise Filtern, Heizelementen, Kühlelementen, Wasserabscheidern oder dergleichen, zu versehen, welche in der Regel an der Umfangswandung befestigt werden.

Im Nutzfahrzeugbereich entstand in den letzten Jahren - bedingt durch wachsende Anforderungen an die Umweltverträglichkeit derartiger Fahrzeuge - ein Bedarf an Kraftstoffbehältern, deren Funktion über die eines konventionellen Kraftstofftanks hinausgeht. So wurde es beispielsweise in jüngster Zeit erforderlich, im Rahmen der Maßnahmen zur Schadstoffredüzierung, zum Beispiel bei der Entstickung von Dieselabgasen, Harnstoff im Abgassystem von Kraftfahrzeugen einzusetzen. Damit entstand ein Bedarf an Tanks, die zum Mitführen des benötigten, chemisch aggressiven Harnstoffs geeignet sind.

Aus dem allgemeinen Stand der Technik ist es dabei bekannt, Zusatztanks zur Aufnahme des Harnstoffs an bestehende Kraftstoffbehälter durch Kleben, Schrauben, Nieten oder Schweißen anzubringen. Bekannt ist es zudem, den Kraftstoffbehälter durch eine Trennwand zu unterteilen, so dass zwei (oder mehrere) voneinander getrennte Innenräume entstehen.

Eine besonders vorteilhafte Lösung zur Mitführung eines chemisch aggressiven gasförmigen oder flüssigen Mediums ist in der gattungsgemäßen Schrift, der DE 10 2006 054 208.8, beschrieben. Dabei ist vorgesehen, dass die Innenseite der Tragstruktur eines Behälters mit einer Kunststoff-Sinterschicht bedeckt ist. Hierzu ist die Tragstruktur aus einem vergleichsweise steifen Material, wie beispielsweise einem Metall, gefertigt, auf deren Innenwandung die dünne Kunststoff-Sinterschicht aufgebracht ist. Dabei kann vorgesehen sein, dass der mit der Kunststoff-Sinterschicht versehene Behälter durch eine umlaufende Schweißnaht mit einem zweiten Behälter, bei dem es sich um einen regulären Kraftstoffbehälter handelt, verbunden wird. Der mit der Kunststoff-Sinterschicht versehene Behälter stellt dabei einen Zusatztank dar.

Die Lösung hat sich für viele Anwendungsgebiete als geeignet herausgestellt, in kostengünstiger Art und Weise einen aus zwei Teilbehältern gebildeten gemeinsamen großen Behälter zu schaffen und diesen in üblicher Weise an einer Halterungseinrichtung, beispielsweise einer Konsole eines Nutzfahrzeugs, anzubringen.

Der vorliegenden Erfindung liegt die Aufgabe zugrunde, einen Kraftstoffbehälter zu schaffen, der es ermöglicht, wenigstens zwei Medien getrennt voneinander zu transportieren, wobei der Kraftstoffbehälter einen einfachen Aufbau aufweisen und kostengünstig in der Herstellung sein soll.

Diese Aufgabe wird erfindungsgemäß durch Anspruch 1 und Anspruch 22 gelöst.

Dadurch, dass erfindungsgemäß die Umfangswandung wenigstens eine Mulde aufweist, in der der Zusatztank ausgebildet oder eingesetzt ist, wird in einfacher und kostengünstiger Weise ein zusätzlicher Aufnahmeraum zur Aufnahme eines zweiten flüssigen oder gasförmigen Mediums ausgebildet. Durch die Ausbildung einer Mulde in der Umfangswandung wird der Zusatztank an dessen Unterseite und wenigstens teilweise an dessen Seitenflächen durch die Mulde bzw. die Umfangswandung vor äußeren Einflüssen bzw. mechanischen Einwirkungen geschützt. Durch die Ausbildung bzw. das Einsetzen des Zusatztanks in die Mulde wird im wesentlichen nur so viel Bauraum für den Zusatztank verwendet, wie dessen Füllvolumen entspricht. Lösungen gemäß dem Stand der Technik haben den Nachteil, dass der Zusatztank durch teilweise aufwändige und bauraumintensive Maßnahmen an einen bestehenden Kraftstoffbehälter angeschweißt werden musste, so dass entsprechend Bauraum verloren geht, der somit nicht zur Befüllung mit einem gasförmigen oder flüssigen Medium verfügbar ist.

Die bekannten Lösungen gemäß dem Stand der Technik, bei denen der Innenraum des Kraftstoffbehälters durch eine Trennwand in zwei Innenräume unterteilt wird, nutzen zwar ebenfalls den Bauraum effektiv aus, sind jedoch ungeeignet, wenn das zweite zur Befüllung vorgesehene Medium beispielsweise aufgrund dessen chemischer Aggressivität eine andere Hülle benötigt als das erste Medium.

Die aus der DE 10 2006 054 208.8 bekannte Lösung ermöglicht zwar ebenfalls ein vorteilhaftes Mitführen eines zweiten Mediums, hat jedoch, wenn das zweite Medium nur einen relativ geringen Befüllraum von beispielsweise 5 bis 50 Litern, vorzugsweise 20 bis 30 Litern, benötigt, kostenmäßige Nachteile gegenüber der erfindungsgemäßen Lösung.

Durch die erfindungsgemäße Lösung ist es nunmehr möglich, in platzsparender Weise einen Zusatztank auszubilden. Der Kraftstoffbehälter kann, obwohl dieser zwei voneinander getrennte Innenräume zur Aufnahme von flüssigen oder gasförmigen Medien aufweist, wie ein Tank gehandhabt werden.

Die Mulde kann zum Beispiel in Form einer Wanne oder einer Einbuchtung ausgebildet sein. Die Mulde kann durch eine Verprägung, einen Rücksprung oder dergleichen hergestellt werden.

Erfindungsgemäß können auch mehrere Mulden zur Aufnahme (bzw. zum Einsetzen oder Ausbilden) von Zusatztanks vorgesehen sein.

Von Vorteil ist es, wenn die Mulde auf der Oberseite der Umfangswandung ausgebildet ist. Eine Befestigung bzw. ein Einsetzen des Zusatztanks ist somit in besonders einfacher Weise möglich.

Nach einer Ausführungsform des Erfindung ist die Umfangswandung, welche eine im wesentlichen rohrförmige Hülle aufweist, die an ihren beiden Stirnseiten durch Stirnwandungen verschlossen ist, aus Metall gebildet . Vorgesehen sein kann vorzugsweise Aluminium, Stahl, Edelstahl oder eine Legierung aus einem dieser Metalle. Vorgesehen sein kann jedoch auch eine Ausgestaltung der Umfangswandung aus Kunststoff.

Der durch den Zusatztank geschaffene Befüllraum eignet sich besonders zur Aufnahme von Kraft- oder Betriebsstoffen, die aufgrund deren chemischer Aggressivität eine nichtmetallische Hülle benötigen. Hierbei kann es sich vorzugsweise um einen Harnstoff bzw. Ad Blue handeln. Grundsätzlich ist jedoch auch die Aufnahme von anderen Kraft- oder Betriebsstoffen, wie z. B. Biodiesel, einen Zweitkraftstoff, eine Betriebsstoffkompönente bzw. Drittbetriebsstoffkomponente, möglich. Eine Aufnahme von Wasser in dem Zusatztank bietet sich dann an, wenn in dem Kraftstoffbehälter ein Wasserabscheider integriert ist, durch welchen aus dem im Innenraum des Kraftstoffbehälters eingebrachten Medium Wasser abgesondert wird.

Von Vorteil ist es, wenn der Zusatztank aus Kunststoff gebildet ist. Durch eine derartige Ausbildung ist er geeignet, auch chemisch aggressive Medien, wie z. B. Harnstoff, aufzunehmen.

Aufgrund der Anordnung des Kraftstoffbehälter in der Mulde können die an die Mulde angrenzenden Wände des Zusatztanks entsprechend dünn ausgebildet werden, da der Zusatztank seine Stabilität durch die Wände der Mulde erhält. Lediglich die Seite des Zusatztanks, die nicht an die Mulde angrenzt, sollte vorzugsweise derart gestaltet sein, dass diese äußeren Einflüssen standhält.

Von Vorteil ist es, wenn der Zusatztank eine an die wenigstens eine Mulde angepasste Form aufweist, vorzugsweise formschlüssig in die Mulde einsetzbar ist.

Der Zusatztank kann vorzugsweise als Ziehteil ausgebildet sein, wodurch eine hohe Formstabilität sichergestellt wird.

Eine Verbindung des Zusatztanks mit der Umfangswandung bzw. der Mulde kann auf verschiedene Art und Weise erfolgen, beispielsweise durch eine Verschraubung, ein Verschweißen oder ein Verkleben des Zusatztanks mit der Umfangswandung bzw. der Mulde, vorzugsweise einem Rand bzw. Randbereich der Mulde.

In einer konstruktiven Ausgestaltung der Erfindung kann die Umfangswandung mit Bolzen, vorzugsweise Schweißbolzen, versehen sein, über welche der Zusatztänk mit der Umfangswandung verbindbar ist. Von Vorteil ist es hierbei, wenn der Kraftstoffbehälter eine Umfangswandung aus Aluminium aufweist und die Schweißbolzen als Aluminiumschweißbolzen ausgebildet sind. Diese können mittels einem Roboter schnell, exakt und vollautomatisch gesetzt werden. Die Schweißbolzen können dabei an dem vorgesehenen Punkt der Umfangswandung angesetzt und anschließend durch einen Stromimpuls in die Umfangswandung eingeschmolzen werden. Derartige Aluminiumschweißbolzen eignen sich in besonderer Weise, um den Zusatztank zuverlässig mit der Umfangswandung zu verbinden. Eine herkömmliche Stärke der Umfangswandung ist hierfür ausreichend.

Zur Anbindung des Zusatztanks an die Bolzen kann der Zusatztank mit Metallhülsen versehen sein.

Von Vorteil ist es, wenn die Oberseite des Zusatztanks wenigstens annähernd in einer Ebene mit der Umfangswandung verläuft. Es wird somit vermieden, dass der Zusatztank über die Umfangswandung bzw. die Ebene der Seitenfläche der Umfangswandung, in deren Mulde der Zusatztank eingesetzt ist, hinausragt. Dies vereinfacht die Handhabung des Kraftstoffbehälters und vermeidet Beschädigungen. Zudem wird der Zusatztank vor äußeren Einflüssen bzw. mechanischen Einwirkungen weitgehend geschützt.

In einer weiteren Ausgestaltung der Erfindung kann vorgesehen sein, dass eine Abdeckung auf die Oberseite des Zusatztanks aufgebracht ist, welche über den Rand der Mulde übersteht und mit der Umfangswandung verbunden ist. Die Verbindung kann beispielsweise durch eine Verklebung, ein Verschweißen oder eine Verschraubung erfolgen. Vorgesehen sein kann dabei auch, dass an der Unterseite der Abdeckung eine Flachdichtung vorgesehen ist, welche die Öffnung der Mulde flüssigkeitsdicht nach außen abdichtet, so dass keine Flüssigkeit von außen eindringen kann.

Die Abdeckung kann beispielsweise als Regenschutz ausgebildet sein. Die Abdeckung kann jedoch auch dazu dienen, den Zusatztank vor äußeren Einflüssen zu schützen. In diesem Fall kann die Oberseite des Zusatztanks entsprechend dünn ausgebildet sein.

Alternativ oder ergänzend zu der Abdeckung kann auch vorgesehen sein, dass zwischen dem Zusatztank und einem Rand der Öffnung der Mulde bzw. der Umfangswandung eine Dichtung eingesetzt ist, welche ein Eindringen von Flüssigkeit in die Mulde verhindert. Die Dichtung kann dabei auch zur Stabilisierung bzw. Befestigung des Zusatztanks in der Mulde beitragen. In einer besonders vorteilhaften Ausgestaltung kann die Dichtung als umlaufende Gummileiste ausgebildet sein. Möglich ist jedoch auch die Ausbildung aus Silikon oder dergleichen.

In einer Weiterbildung der Erfindung kann vorgesehen sein, dass der mit der Mulde versehene Teil der Umfangswandung als separates Kunststoffmodul ausgebildet ist, welches in wenigstens eine offene Stirnseite der Umfangswandung eingesetzt ist, wobei das hintere Teilstück des Kunststoffmoduls in die Umfangswandung ragt und mit der Umfangswandung verbunden ist und das vordere, mit der Mulde versehene Teilstück über die Stirnseite der Umfangswandung übersteht. Diese Variante bietet verschiedene Vorteile. Die Mulde wird durch diese Variante aus Kunststoff ausgebildet und ist somit direkt geeignet, ein chemisch aggressives Medium aufzunehmen. Es muss lediglich noch die Öffnung der Mulde mit einer geeigneten Verschlussplatte, vorzugsweise ebenfalls aus Kunststoff, abgedeckt werden. Eine flüssigkeitsdichte Verbindung lässt sich dabei durch geeignete Dichtungen bzw. ein geeignetes Verschrauben, Verschweißen oder Verkleben der Verschlussplatte am Rand der Öffnung der Mulde bzw. der Umfangswandung erreichen. Das Einsetzen eines von der Mulde unabhängigen Zusatztanks aus Kunststoff ist somit nicht notwendig, vielmehr wird der Zusatztank durch die:Mulde und die Verschlussplatte gebildet.

Die Ausbildung eines separaten Kunststoffmoduls ermöglicht es zudem, einen Kraftstoffbehälter zu schaffen, der den zur Verfügung stehenden Bauraum eines Nutzfahrzeugs effektiv nutzt, da das in die offene Stirnseite der Umfangswandung eingesetzte Kunststoffmodul in einfacher und kostengünstiger Weise in eine Form gebracht werden kann, die an den vom Nutzfahrzeug vorgegebenen Bauraum angepasst ist. Aus fertigungstechnischen Gründen kann eine Metallhülle nur in Bereichen angeordnet werden, die mit relativ einfachen Formen erschlossen werden können. Derartigen Beschränkungen unterliegt eine Hülle aus Kunststoff nicht. Das Kunststoffmodul kann dabei zum Beispiel eine Einbuchtung aufweisen, die einen Freiraum zur Aufnahme eines Endbereichs eines Abgassystems des Nutzfahrzeugs schafft. Somit kann der oberhalb des Abgassystems vorhandene Raum vom Kraftstoffbehälter aufgenommen werden. Des weiteren kann vorgesehen sein, dass das Kunststoffmodul wenigstens annähernd an den Verlauf eines Radkastens oder weiterer Anbauteile des Nutzfahrzeugs angepasst ist. Das Kunststoffmodul vergrößert somit den Innenraum des Kraftstoffbehälter und bildet durch die Mulde bereits einen Teil des Zusatztanks aus. Das Kunststoffmodul kann mit bekannten Verfahren, beispielsweise durch Sintern, in einfacher und kostengünstiger Weise in die vorgesehene Form gebracht werden.

Das Kunststoffmodul kann gegebenenfalls auch als separater Behälter ausgebildet sein, der einen dritten Befüllraum zur Verfügung stellt.

Eine vorteilhafte Verwendung eines Moduls eines Kraftstoffbehälters, welches in einer im wesentlichen vertikal verlaufenden Seitenfläche seiner Umfangswandung eine Mulde zum Einsetzen von Trittstufen aufweist, wird nachfolgend anhand des Ausführungsbeispiels näher beschrieben.

Ein Verfahren zum Herstellen eines Zusatztanks aus Kunststoff kann vorsehen, dass zunächst eine Umfangswandung eines Kraftstoffbehälters mit einer Mulde versehen wird. Anschließend kann die Mulde zur Ausbildung eines Zusatztanks aus Kunststoff mit einer Kunststoff-Sinterschicht bedeckt werden, wonach vor oder nach dem Sintervorgang die Öffnung der Mulde mit einer Verschlussplatte verschlossen wird. Bezüglich eines vorteilhaften Auftragens einer Kunststoff-Sinterschicht wird auf die DE 10 2006 054 208.8 verwiesen.

Die vor oder nach dem Sintervorgang zum Verschließen der Öffnung der Mulde aufzubringende Verschlussplatte kann vorzugsweise aus Kunststoff gebildet sein oder auf der Innenseite durch den Sintervorgang ebenfalls mit einer Kunststoffschicht versehen werden.

Vorteilhafte Ausgestaltungen und Weiterbildungen der Erfindung ergeben sich aus den weiteren abhängigen Ansprüchen.

Nachfolgend ist anhand der Zeichnung ein Ausführungsbeispiel der Erfindung prinzipmäßig dargestellt.

### Es zeigt:

- Fig. 1: eine prinzipmäßige perspektivische Darstellung eines erfindungsgemäßen Kraftstoffbehälters mit einer Mulde vor dem Einsetzen eines Zusatztanks;
- Fig. 2: eine prinzipmäßige perspektivische Darstellung eines erfindungsgemäßen Kraftstoffbehälters, wobei in die Mulde ein Zusatztank eingesetzt ist;
- Fig. 3: eine Darstellung gemäß Fig. 2, wobei der Zusatztank und ein Teil der Umfangswandung im Querschnitt dargestellt sind;
- Fig. 4: eine Darstellung gemäß Fig. 2, wobei auf die Oberseite des Zusatztanks eine Abdeckung aufgebracht ist;
- Fig. 5: eine zu Fig. 2 alternative Ausgestaltung, bei der die Oberseite des Zusatztanks über einen Rand der Öffnung der Mulde hinausragt und der Überstand mit Bolzen, welche in die Umfangswandung eingesetzt sind, flüssigkeitsdicht mit der Umfangswandung verschraubt ist; und

- Fig. 6: eine zu den Figuren 1 bis 5 alternative Ausgestaltung des erfindungsgemäßen Kraftstoffbehälters (gemäß Anspruch 23), wobei die Umfangswandung eine Aussparung bzw. eine Öffnung aufweist, in die ein in Fig. 6 nicht dargestellter Zusatztank flüssigkeitsdicht einsetzbar ist.

Die dargestellten und nachfolgend beschriebenen Ausführungsbeispiele zeigen einen Kraftstoffbehälter, der für Nutzfahrzeuge, insbesondere Lastkraftwagen, ausgebildet ist. Da Kraftstoffbehälter dieser Art allgemeine bekannt sind, wird nachfolgend nur auf die für die Erfindung wesentlichen Teile des Kraftstoffbehälters näher eingegangen. Der Kraftstoffbehälter kann aus beliebigen hierfür bekannten Materialien - auch in Hybridbauweise - gebildet sein.

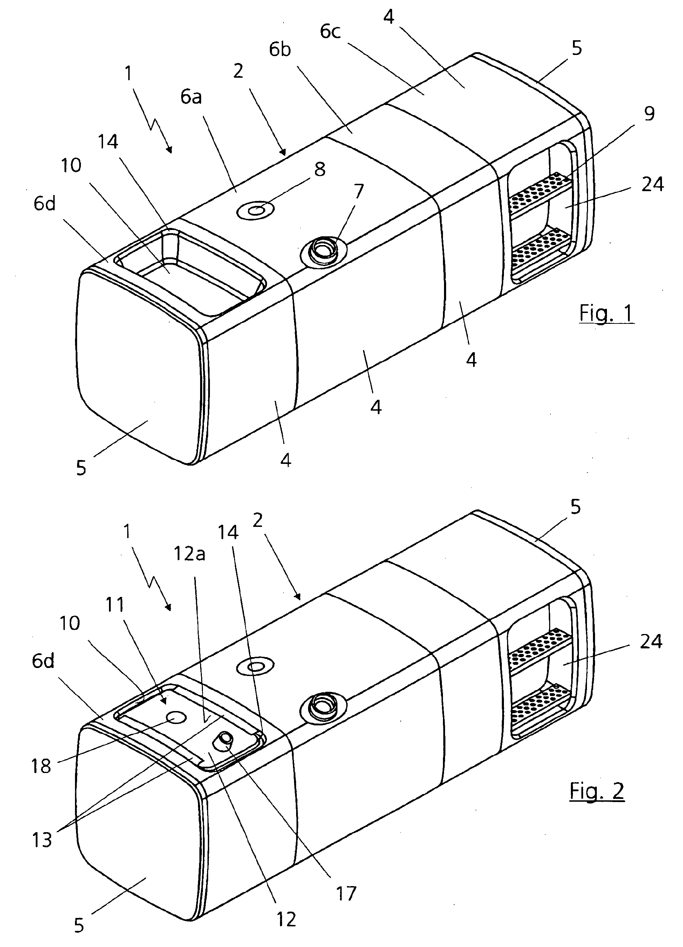

Die Figuren 1 bis 6 zeigen einen Kraftstoffbehälter 1 mit einer Umfangswandung 2, welcher wenigstens einen Innenraum 3 zur Aufnahme eines flüssigen oder gasförmigen Mediums ausbildet. Im Ausführungsbeispiel ist dabei die Aufnahme eines flüssigen Mediums, vorzugsweise eines Kraftstoffes, vorzugsweise Diesel, vorgesehen. Vorgesehen ist eine Ausbildung des Kraftstoffbehälter 1 als großvolumiger Kraftstoffbehälter mit einer Aufnahmekapazität des Innenraums 3 von 300 bis 1.600 Litern, vorzugsweise von 500 bis 1.000 Litern.

Die Umfangswandung 2 ist im Ausführungsbeispiel durch eine rohrförmige bzw. zylindrische Hülle 4 und zwei Stirnwandungen 5, welche die beiden offenen Stirnseiten der rohrförmigen Hülle 4 verschließen, gebildet. Die Stirnwandungen 5 bilden somit die Stirnseiten der Umfangswandung 2. Die rohrförmige Hülle 4 kann aus einem Blech in die Rohrform gebogen werden.

Die rohrförmige Hülle 4 und die Stirnwandungen 5 sind im Ausführungsbeispiel aus Metall, genauer aus Aluminium, ausgebildet. In Frage kommt jedoch auch die Ausgestaltung aus einem anderen metallischen Werkstoff oder aus einem Kunststoff.

In den dargestellten Ausführungsbeispielen ist vorgesehen, dass der Kraftstoffbehälter 1 modular ausgebildet ist. Die rohrförmige Hülle 4 setzt sich somit aus mehreren Modulen 6 bzw. Teilrohrstücken zusammen, die in bekannter Weise miteinander verbunden, vorzugsweise verschweißt sind. Die rohrförmige Hülle 4 ist in den Ausführungsbeispielen aus vier Modulen 6a, 6b, 6c, 6d gebildet. Im Ausführungsbeispiel ist dabei vorgesehen, dass ein Modul als Technikmodul 6a mit unter anderem einer Befüllöffnung 7 und einer Entnahmeöffnung 8 versehen ist. Ein weiteres Modul ist als einfaches Verlängerungsmodul 6b ausgebildet. Ein drittes Modul ist als Treppenmodul 6c ausgebildet und mit Trittstufen 9 versehen.

Im vierten Modul 6d ist die erfindungsgemäße Lösung realisiert. Der durch das Modul 6d gebildete Teil der Umfangswandung 2 weist eine Mulde 10 bzw. eine Wanne bzw. eine Einbuchtung bzw. einen Rücksprung oder eine Verprägung auf, in der ein Zusatztank 11 ausgebildet oder eingesetzt ist. Der Zusatztank 11 dient dabei zur Aufnahme eines zweiten flüssigen oder gasförmigen Mediums. Bei diesem Medium kann es sich vorzugsweise um einen weiteren Kraft- oder Betriebsstoff, z. B. einen Harnstoff, Ad Blue, Biodiesel, einen Zweitkraftstoff, eine Betriebsstoffkomponente bzw. Drittstoffkomponente oder Wasser, handeln. Im Ausführungsbeispiel ist vorgesehen, dass in den Zusatztank 11 ein chemisch aggressives Medium, im vorliegenden Fall Harnstoff, eingebracht wird, hierfür ist der Zusatztank 11 entsprechend ausgelegt. Die Mulde 10 ist auf der Oberseite der Umfangswandung 2 ausgebildet, d. h. das Modul 6d ist derart mit den anderen Modulen 6a, 6b, 6c verbunden, dass sich die Mulde 10 in dem Zustand, in dem der Kraftstoffbehälter 1 an ein Nutzfahrzeug angebracht wird, auf der Oberseite befindet.

Gegebenenfalls kann das Modul 6d auch mehrere Mulden 10 mit mehreren Zusatztanks 11 aufweisen. Vorstellbar ist auch der Einsatz von mehreren Modulen, die mit einer entsprechenden Mulde 10 oder einem Zusatztank 11 versehen sind.

In den Ausführungsbeispielen ist vorgesehen, dass der Zusatztank ein Volumen von 20 bis 30 Litern aufweist. Ein derartiges geringes Volumen ist möglich, da aufgrund moderner Motorsteuerungen die Menge an Harnstoff, die zur Entstickung von Dieselabgasen eingesetzt wird, reduziert werden kann.

In den Ausführungsbeispielen ist vorgesehen, dass der Zusatztank 11 eine von der Umfangswandung 2 bzw. der Mulde 10 unabhängige Hülle 12 aufweist. Ferner ist in den Ausführungsbeispielen vorgesehen, dass der Zusatztank 11 aus Kunststoff gebildet ist. Dies gestattet in einfacher und kostengünstiger Weise die Aufnahme eines chemisch aggressiven Mediums und ermöglicht eine Formgebung des Zusatztanks 11, die an die Mulde 10 bzw. die Form der Mulde 10 angepasst ist. Im Ausführungsbeispiel ist vorgesehen, dass der Zusatztank 11 wenigstens teilweise formschlüssig in die Mulde 10 einsetzbar ist.

Fig. 1 zeigt eine Darstellung des erfindungsgemäßen Kraftstoffbehälter 1, bei dem der Zusatztank 11 noch nicht in die Mulde 10 eingesetzt ist.

Fig. 2 zeigt eine Darstellung analog zu Fig. 1, wobei der Zusatztank 11 in die Mulde 10 eingesetzt ist. Der Zusatztank 11 passt sich dabei formschlüssig der Mulde 10 an. Der Zusatztank 11 kann in die Mulde 10 eingepresst werden. Eine zusätzliche Abdichtung kann durch eine Dichtung 13 erfolgen, welche zwischen dem Zusatztank 11 und einem Rand 14 der Mulde 10 eingesetzt ist. Die Dichtung 13 umfasst dabei im Ausführungsbeispiel zwei Dichtleisten 13. Die Dichtung 13 kann alternativ dazu auch um den Zusatztank 11 umlaufend ausgebildet sein. Eine Ausbildung der Dichtung 13 aus Gummi hat sich für beide Anwendungsfälle als besonders geeignet herausgestellt.

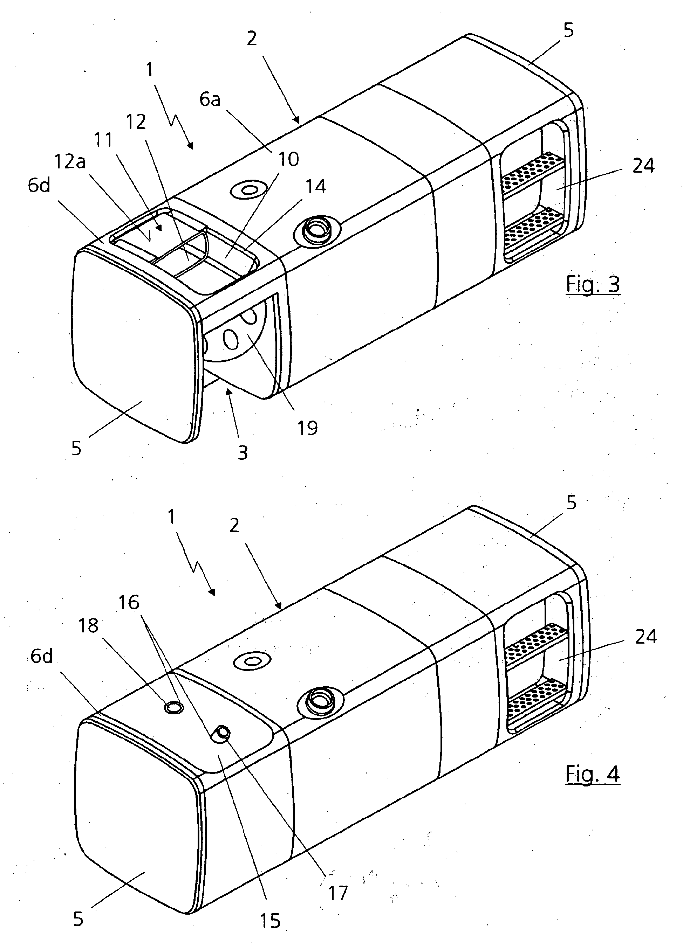

Eine umlaufende Ausbildung der Dichtung 13 hat sich insbesondere dann als vorteilhaft herausgestellt, wenn dieser im wesentlichen die Aufgabe zukommt, ein Eindringen von Flüssigkeit in die Mulde 10 zu verhindern. Im Ausführungsbeispiel ist jedoch (siehe Fig. 4) vorgesehen, dass eine Abdeckung 15 auf eine Oberseite 12a des Zusatztanks 11 aufgebracht ist, welche (vertikal) über den Rand 14 der Mulde 10 übersteht bzw. überlappt und mit der Umfangswandung 2 verbunden ist. Vorgesehen ist dabei im Ausführungsbeispiel, dass die Verbindung der Abdeckung 15 mit der Umfangswandung flüssigkeitsdicht erfolgt. Die Abdeckung 15 kann hierzu, in nicht näher dargestellter Weise, mit der Umfangswandung 2 verschraubt, verschweißt, verklebt oder auf andere Weise verbunden sein.

Die Abdeckung 15 weist Öffnungen 16 auf, die einen Zugriff auf eine Befüllöffnung 17 bzw. eine Entnahmeöffnung 18 des Zusatztanks 11 ermöglichen.

Fig. 3 zeigt eine Darstellung gemäß Fig. 2, wobei das Modul 6d bzw. dessen Umfangswandung 2 teilweise geschnitten ist und auch der Zusatztank 11 in einer Schnittdarstellung dargestellt ist. Die Hülle 12 des Zusatztanks 11 muss im Ausführungsbeispiel keine wesentlichen mechanischen Einwirkungen aufnehmen, da diese Aufgabe im wesentlichen von der Mulde 10 übernommen wird und ist daher entsprechend dünn ausgebildet.

Wie sich aus der Schnittdarstellung gemäß Fig. 3 ergibt, ist zwischen dem Funktionsmodul 6a und dem mit der Mulde 10 versehenen Modul 6d eine Schwallwand 19 angeordnet.

Der Zusatztank 11 kann alternativ oder ergänzend dazu dass die Abdeckung 15 mit der Umfangswandung 2 verbunden ist, mit der Umfangswandung 2 kraftschlüssig bzw. durch Verschrauben, Verschweißen oder Verkleben verbunden sein.

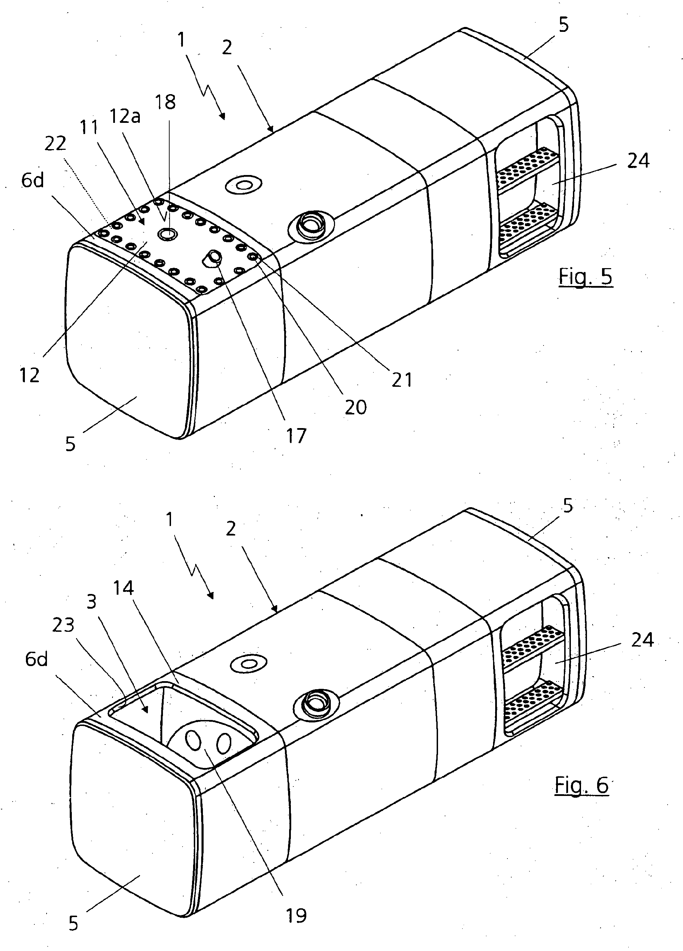

Fig. 5 zeigt eine Ausgestaltung, bei der der Zusatztank 11 mit der Umfangswandung 2 verschraubt ist. Auf eine Abdeckung 15 ist in der in Fig. 5 dargestellten Ausführungsform zunächst verzichtet worden. Dies kann jedoch zusätzlich aufgebracht werden. Vorgesehen ist gemäß Fig. 5, dass die Oberseite 12a des Zusatztanks 11 (vertikal) über den Rand 14 der Öffnung der Mulde 10 übersteht bzw. überlappt. Der Überstand der Oberseite 12a des Zusatztanks 11 ist dabei flüssigkeitsdicht mit der Umfangswandung 2 verbunden. Dabei ist vorgesehen, dass die Oberseite 12a des Zusatztanks 11 wenigstens annähernd in einer Ebene mit der Umfangswandung 2 verläuft. Im vorliegenden Fall verläuft die Oberseite 12a in einer Ebene mit der Oberseite der Umfangswandung 2 bzw. des Kraftstoffbehälters 1. Dies ist auch bei den anderen in den Figuren 1 bis 6 dargestellten Ausführungsformen so der Fall und generell die bevorzugte Ausführungsform.

Zur Anbindung des Zusatztanks 11 an die Umfangswandung 2 bzw. zur Anbindung der Oberseite 12a an die Umfangswandung 2 ist die Umfangswandung 2 mit Bolzen 20 versehen. Dies ist in Fig. 5 dargestellt. Die Bolzen 20 sind im Ausführungsbeispiel als Aluminiumschweißbolzen ausgebildet und werden in bekannter Art und Weise mit der Umfangswandung 2 verbunden. Der Zusatztank 11 bzw. dessen Oberseite 12a ist mit Hülsen 21, vorzugsweise Metallhülsen, zur Verschraubung an den Schweißbolzen 20 der Umfangswandung 2 versehen. Die Metallhülsen 21 können in einfacher Weise in die Oberseite 12a des Zusatztanks 11 eingesintert werden.

Der Zusatztank 11 kann an der Unterseite des Überstands mit einer umlaufenden auf die Umfangswandung 2 ausgerichteten Flachdichtung oder gegebenenfalls einem oder mehreren Flanschen versehen sein, durch die sichergestellt wird, dass der Überstand der Oberseite 12a des Zusatztanks 11 flüssigkeitsdicht mit der Umfangswandung 2 verbunden ist. Alternativ oder ergänzend kann der Zusatztank vollständig oder zumindest im Bereich des Überstands aus einem weichen Kunststoff gebildet sein oder einen weichen Kunststoff aufweisen.

In einer nicht näher dargestellten Ausführungsform kann auch vorgesehen sein, dass die Abdeckung 15 gemäß Fig. 4 über Schweißbolzen 20 analog Fig. 5 mit der Umfangswandung 2 verbunden wird.

In einer ebenfalls nicht näher dargestellten Ausführungsform kann, ausgehend von der in Fig. 1 dargestellten Mulde 10, auch vorgesehen sein, dass der Zusatztank 11 durch die Mulde 10 und eine die Öffnung der Mulde 10 verschließende Verschlussplatte 22 gebildet ist. Nach dem Verschließen der Mulde 10 mit der Verschlussplatte 22 ergibt sich das in Fig. 5 dargestellte Bild, daher ist in Fig. 5 der Bezugszeichenstrich 22 strichliniert als Alternativlösung dargestellt. In diesem Fall könnte die in Fig. 5 dargestellte Oberseite 12a als Verschlussplatte 22 ausgebildet sein. Die Verschlussplatte 22 ist dabei flüssigkeitsdicht mit der Umfangswandung 2 verbunden. Die Verbindung mit dem Modul 6d bzw. der Umfangswandung 2 kann in beliebiger Art und Weise erfolgen, vorzugsweise gemäß der in Fig. 5 beschriebenen Ausführungsform. Die Verschlussplatte 22 kann ferner mit einer Befüllöffnung 17 und einer Entnahmeöffnung 18 versehen sein.

Eine Ausbildung des Zusatztanks 11 lediglich durch die Mulde 10 und eine Verschlussplatte 22 eignet sich in besonderer Weise, wenn der mit der Mulde 10 versehene Teil der Umfangswandung 2 aus Kunststoff gebildet ist oder auf der Innenseite mit einer Kunststoffschicht versehen ist. Vorteilhaft ist es dabei, wenn die Verschlussplatte 22 ebenfalls aus Kunststoff gebildet ist bzw. Kunststoff aufweist oder auf der der Mulde 10 zugewandten Innenseite mit einer Kunststoffschicht versehen ist.

Insofern vorgesehen ist, dass der mit der Mulde 10 versehene Teil der Umfangswandung 2 aus Kunststoff gebildet ist, kann vorzugsweise vorgesehen sein, dass das ganze Modul 6d aus Kunststoff gebildet ist.

Fig. 6 zeigt eine alternative erfindungsgemäße Möglichkeit einen Kraftstoffbehälter 1 für Nutzfahrzeuge, welcher eine Umfangswandung 2 aufweist, die wenigstens einen Innenraum 3 zur Aufnahme eines flüssigen oder gasförmigen Mediums ausbildet, mit einem Zusatztank 11 zur Aufnahme eines zweiten flüssigen oder gasförmigen Mediums auszubilden. Hierbei ist vorgesehen, dass die Umfangswandung 2 auf der Oberseite wenigstens eine Öffnung 23 oder eine Aussparung aufweist, in welche der Zusatztank 11 mit einer von der Umfangswandung 2 unabhängigen Hülle 12 eingesetzt und mit der Umfangswandung 2 flüssigkeitsdicht verbunden wird. Der Zusatztank 11 kann dabei analog dazu ausgebildet sein, wie dies bereits bezüglich der in den Figuren 1 bis 5 dargestellten Ausführungsformen beschrieben wurde. Der Kraftstoffbehälter 1 kann zudem ebenfalls analog den in den Figuren 1 bis 5 beschriebenen Ausführungsformen gebildet sein.

Von Vorteil ist es, wenn in der in Fig. 6 dargestellten Ausführungsform vorgesehen ist, dass die Oberseite 12a des Zusatztanks 11 vertikal über einen Rand 14 der Öffnung 23 übersteht, wobei der Überstand dicht mit der Umfangswandung 2, vorzugsweise durch Verkleben, Verschweißen oder Verschrauben, verbunden ist. Hierzu wird auf die gemäß Fig. 5 beschriebenen Varianten und Ausgestaltungen verwiesen, die analog eingesetzt werden können. Zwischen dem Überstand und einem Rand 14 der Öffnung 23 kann umlaufend eine Flachdichtung eingesetzt sein, welche ein Eindringen von Flüssigkeit in die Öffnung 23 verhindert.

Die in den Ausführungsformen gemäß den Figuren 1 bis 5 dargestellte Mulde 10 lässt sich in besonders einfacher Weise durch Verwendung eines Moduls 6c eines Kraftstoffbehälters 1 bilden. Das Modul 6c weist in einer im wesentlichen vertikal verlaufenden Seitenfläche seiner Umfangswandung 2 eine Mulde 24 zum Einsetzen von Trittstufen 9 auf. Die Mulde 24 für die Trittstufen 9 gemäß dem Modul 6c entspricht in den Ausführungsbeispielen gemäß den Figuren 1 bis 5 der Mulde 10 für den Zusatztank 11 im Modul 6d. Durch ein Drehen des Moduls 6c vor dem Einsetzen der Trittstufen 9 derart, dass die Mulde 24 statt an der Seitenfläche an der Oberfläche des Kraftstoffbehälters 1 angeordnet ist, wird eine Mulde 10 ausgebildet, in die ein an die Mulde 10 angepasster Zusatztank einsetzbar ist. Eine derartige Verwendung eines Moduls 6c ermöglicht eine besonders kostengünstige Fertigung. Das Modul 6c kann in einfacher Weise in großer Stückzahl hergestellt werden, wobei eine Veränderung der Einbaulage bewirkt, dass die Mulde entweder als Mulde 24 zum Einsetzen von Trittstufen 9 oder als Mulde 10 zum Einsetzen oder Ausbilden eines Zusatztanks 11 verwendet werden kann.

Ein besonders bevorzugtes Verfahren zum Herstellen eines Zusatztanks 11 aus Kunststoff ergibt sich, ausgehend von der in Fig. 1 dargestellten Ausführungsform. Dabei wird die metallische Umfangswandung 2 bzw. gemäß Fig. 1 das Modul 6d mit einer Mulde 10 versehen. Anschließend wird die Mulde 10 zur Ausbildung eines Zusatztanks 11 aus Kunststoff mit einer Kunststoff-Sinterschicht bedeckt. Vor oder nach dem Sintervorgang wird die Mulde 10 mit einer Verschlussplatte 22 verschlossen. Die Verschlussplatte 22 kann vorzugsweise ebenfalls aus Metall gebildet sein, wenn diese vor dem Sintervorgang die Öffnung der Mulde 10 verschließt. Alternativ dazu kann die Verschlussplatte 22 jedoch auch unabhängig von der Mulde 10 aus Kunststoff ausgebildet sein oder auf der Innenseite mit einer Kunststoffschicht ausgebildet werden. Vorteilhaft ist es dabei, wenn die Mule 10 als Sinterwerkzeug Verwendung findet.

## Patentansprüche

1. Kraftstoffbehälter für Nutzfahrzeuge mit einer Umfangswandung, welche wenigstens einen Innenraum zur Aufnahme eines flüssigen oder gasförmigen Mediums ausbildet, wobei die Umfangswandung eine im Wesentlichen rohrförmige Hülle aufweist, die an ihren beiden Stirnseiten durch Stirnwandungen verschlossen ist, wobei wenigstens ein Zusatztank zur Aufnahme eines zweiten flüssigen oder gasförmigen Mediums ausgebildet ist,
**dadurch gekennzeichnet, dass**
die Umfangswandung (2) wenigstens eine Mulde (10) in Form einer Wanne aufweist, in der der Zusatztank (11) ausgebildet oder eingesetzt ist, wobei die Oberseite (12a) des Zusatztanks (11) in einer Ebene mit der Umfangswandung (2) verläuf.

2. Kraftstoffbehälter nach Anspruch 1,
**dadurch gekennzeichnet, dass**
die Mulde (10) auf der Oberseite (12a) der Umfangswandung (2) ausgebildet ist.

3. Kraftstoffbehälter nach einem der Ansprüche 1 oder 2,
**dadurch gekennzeichnet, dass**
der Kraftstoffbehälter (1) modular ausgebildet ist und wenigstens eines der Module (6) mit einer Mulde (10) versehen ist.

4. Kraftstoffbehälter nach einem der Ansprüche 1 bis 3,
**dadurch gekennzeichnet, dass**
die Umfangswandung (2) aus Metall gebildet ist.

5. Kraftstoffbehälter nach einem der Ansprüche 1 bis 3,
**dadurch gekennzeichnet, dass**
die Umfangswandung (2) aus Kunststoff gebildet ist.

6. Kraftstoffbehälter nach einem der Ansprüche 1 bis 5,
**dadurch gekennzeichnet, dass**
der Zusatztank (11) ein Volumen von 5 bis 50 Litern aufweist.

7. Kraftstoffbehälter nach einem der Ansprüche 1 bis 6,
**dadurch gekenntzeichnet** dass
der Zusatztank (11) zur Aufnahme eines Harnstoffes, einer Betriebsstoffkomponente oder Wasser, ausgebildet ist.

8. Kraftstoffbehälter nach einem der Ansprüche 1 bis 7,
**dadurch gekennzeichnet, dass**
der mit der Mulde (10) versehene Teil der Umfangswandung (2) als separates Kunststoffmodul ausgebildet ist, welches in wenigstens eine offene Stirnseite der Umfangswandung (2) eingesetzt ist, wobei das hintere Teilstück des Kunststoffmoduls in die Umfangswandung (2) ragt und mit der Umfangswandung (2) verbunden ist und das vordere, mit der Mulde (10) versehene Teilstück über die Stirnseite der Umfangswandung (2) übersteht.

9. Kraftstoffbehälter nach einem der Ansprüche 1 bis 8,
**dadurch gekennzeichnet, dass**
der Zusatztank (11) eine von der Umfangswandung (2) unabhängige Hülle (12) aufweist.

10. Kraftstoffbehälter nach einem der Ansprüche 1 bis 9,
**dadurch gekennzeichnet, dass**
der Zusatztank (11) aus Kunststoff gebildet ist.

11. Kraftstoffbehälter nach einem der Ansprüche 1 bis 10,
**dadurch gekennzeichnet, dass**
der Zusatztanks (11) eine an die weinigstens eine Mulde (10) angepasste Form aufweist.

12. Kraftstoffbehälter nach einem der Ansprüche 1 bis 11,
**dadurch gekennzeichnet, dass**
der Zusatztank (11) mit der Umfangswandung (2) durch Verschrauben, Verschweißen oder Verkleben verbunden ist.

13. Kraftstoffbehälter nach Anspruch 12,
**dadurch gekennzeichnet, dass**
die Umfangswandung (2) mit Bolzen (20) versehen ist, über welche der Zusatztank (11) mit der Umfangswandung (2) verbindbar ist.

14. Kraftstoffbehälter nach Anspruch 12 oder 13,
**dadurch gekennzeichnet, dass**
der Zusatztank (11) mit Metallhülsen (21) zur Verschraubung an der Umfangswandung (2) versehen ist.

15. Kraftstoffbehälter nach einem der Ansprüche 1 bis 14,
**dadurch gekennzeichnet, dass**
die Oberseite (12a) des Zusatztanks (11) über einen Rand (14) der Mulde (10) übersteht.

16. Kraftstoffbehälter nach Anspruch 15,
**dadurch gekennzeichnet, dass**
der Überstand der Oberseite (12a) des Zusatztanks (11) flüssigkeitsdicht mit der Umfangswandung (2) verbunden ist.

17. Kraftstoffbehälter nach einem der Ansprüche 1 bis 14,
**dadurch gekennzeichnet, dass**
zwischen dem Zusatztank (11) und einem Rand (14) der Mulde (10) eine Dichtung (13) eingesetzt ist, welche ein Eindringen von Flüssigkeit in die Mulde (10) verhindert.

18. Kraftstoffbehälter nach Anspruch 17,
**dadurch gekennzeichnet, dass**
die Dichtung (13) eine umlaufende Gümmileiste ist.

19. Kraftstoffbehälter nach einem der Ansprüche 1 bis 18,
**dadurch gekennzeichnet, dass**
eine Abdeckung (15) auf die Oberseite (12a) des Zusatztanks (11) aufgebracht ist, welche über den Rand (14) der Mulde (10) übersteht und mit der Umfangswandung (2) verbunden ist.

20. Kraftstoffbehälter nach einem der Ansprüche 1 bis 8,
**dadurch gekenntzeichnet**, dass
der Zusatztanks (11), durch die Mulde (10) und eine die Öffnung der Mulde (10) verschließende Verschlussplatte (22) gebildet ist, wobei die Verschlussplatte (22) flüssigkeitsdicht mit der Umfangswandung (2) verbunden ist.

21. Kraftstoffbehälter nach Anspruch 20,
**dadurch gekennzeichnet, dass**
die Verschlussplatte (22) und der mit der Mulde (10) versehene Teil der Umfangswandung (2) aus Kunststoff gebildet oder auf der Innenseite mit einer Kunststoffschicht versehen sind.

22. Verwendung eines Treppenmoduls (6c) eines Kraftstoffbehälters (1), welches in einer im wesentlichen vertikal verlaufenden Seitenfläche seiner Umfangswandung (2) eine Mulde (24) zum Einsetzen von Trittstufen (9) aufweist, als Zusatztankmodul (6d) zur Aufnahme eines Zusatztanks (11), wobei das Modul derart gedreht in einen modular aufgebauten und bereits ein Treppenmodul (6c) mit Trittstufen (9) aufweisenden Kraftstoffbehälter (1) eingesetzt wird, dass die mit der Mulde (24) versehene Seitenfläche an der Oberseite des Kraftstoffbehälters (1) angeordnet ist und dadurch die Mulde (10) für den Zusatztank (11) ausbildet, wobei in die Mulde (10) ein an die Form der Mulde (10) angepasster Zusatzbehälter (11) eingesetzt wird.

## Claims

1. Fuel container for commercial vehicles, with a peripheral wall which forms at least one interior space for receiving a liquid or gaseous medium, wherein the peripheral wall has a substantially tubular casing which is closed on the two end sides thereof by end walls, wherein at least one additional tank is designed for receiving a second liquid or gaseous medium,
**characterized in that** the peripheral wall (2) has at least one recess (10) in the form of a trough, in which the additional tank (11) is formed or inserted, wherein the upper side (12a) of the additional tank (11) extends in a plane with the peripheral wall (2).

2. Fuel container according to Claim 1,
**characterized in that** the recess (10) is formed on the upper side (12a) of the peripheral wall (2).

3. Fuel container according to either of Claims 1 and 2,
**characterized in that** the fuel container (1) is of modular design and at least one of the modules (6) is provided with a recess (10).

4. Fuel container according to one of Claims 1 to 3,
**characterized in that** the peripheral wall (2) is formed from metal.

5. Fuel container according to one of Claims 1 to 3,
**characterized in that** the peripheral wall (2) is formed from plastic.

6. Fuel container according to one of Claims 1 to 5,
**characterized in that** the additional tank (11) has a volume of 5 to 50 litres.

7. Fuel container according to one of Claims 1 to 6,
**characterized in that** the additional tank (11) is designed for receiving urea, a fuel component or water.

8. Fuel container according to one of Claims 1 to 7,
**characterized in that** that part of the peripheral wall (2) which is provided with the recess (10) is designed as a separate plastics module which is inserted into at least one open end side of the peripheral wall (2), wherein the rear sub-section of the plastics module projects into the peripheral wall (2) and is connected to the peripheral wall (2), and the front sub-section, which is provided with the recess (10), protrudes over the end side of the peripheral wall (2).

9. Fuel container according to one of Claims 1 to 8,
**characterized in that** the additional tank (11) has a casing (12) which is independent of the peripheral wall (2).

10. Fuel container according to one of Claims 1 to 9,
**characterized in that** the additional tank (11) is formed from plastic.

11. Fuel container according to one of Claims 1 to 10,
**characterized in that** the additional tank (11) has a shape matched to the at least one recess (10).

12. Fuel container according to one of Claims 1 to 11,
**characterized in that** the additional tank (11) is connected to the peripheral wall (2) by screwing, welding or adhesive bonding.

13. Fuel container according to Claim 12,
**characterized in that** the peripheral wall (2) is provided with bolts (20) via which the additional tank (11) is connectable to the peripheral wall (2).

14. Fuel container according to Claim 12 or 13,
**characterized in that** the additional tank (11) is provided with metal sleeves (21) for the screw connection to the peripheral wall (2).

15. Fuel container according to one of Claims 1 to 14,
**characterized in that** the upper side (12a) of the additional tank (11) protrudes over an edge (14) of the recess (10).

16. Fuel container according to Claim 15,
**characterized in that** the excess length of the upper side (12a) of the additional tank (11) is connected in a liquid-tight manner to the peripheral wall (2).

17. Fuel container according to one of Claims 1 to 14,
**characterized in that** a seal (13) which prevents liquid from penetrating into the recess (10) is inserted between the additional tank (11) and an edge (14) of the recess (10).

18. Fuel container according to Claim 17,
**characterized in that** the seal (13) is an encircling rubber strip.

19. Fuel container according to one of Claims 1 to 18,
**characterized in that** a cover (15) is fitted onto the upper side (12a) of the additional tank (11), said cover protruding over the edge (14) of the recess (10) and being connected to the peripheral wall (2).

20. Fuel container according to one of Claims 1 to 8,
**characterized in that** the additional tank (11) is formed by the recess (10) and a closure plate (22) closing the opening of the recess (10), wherein the closure plate (22) is connected in a liquid-tight manner to the peripheral wall (2).

21. Fuel container according to Claim 20,
**characterized in that** the closure plate (22) and that part of the peripheral wall (2) which is provided with the recess (10) are formed from plastic or are provided with a plastics coating on the inner side.

22. Use of a step module (6c) of a fuel container (1), which, in a substantially vertically running side surface of the peripheral wall (2) thereof, has a recess (24) for the insertion of steps (9), as an additional tank module (6d) for receiving an additional tank (11), wherein the module is inserted into a fuel container (1), which is of modular construction and already has a step module (6c) with steps (9), in a rotated manner such that the side surface which is provided with the recess (24) is arranged on the upper side of the fuel container (1) and thereby forms the recess (10) for the additional tank (11), wherein an additional container (11) matched to the shape of the recess (10) is inserted into the recess (10).

## Revendications

1. Récipient de combustible pour véhicules utilitaires, comprenant une paroi périphérique, laquelle forme au moins un espace intérieur pour recevoir un milieu liquide ou gazeux, la paroi périphérique comprenant une enveloppe essentiellement tubulaire qui est fermée par des parois frontales au niveau de ses deux côtés frontaux, au moins un réservoir auxiliaire étant réalisé pour recevoir un deuxième milieu liquide ou gazeux,
**caractérisé en ce que** la paroi périphérique (2) comprend au moins une cavité (10) sous la forme d'un bac, dans laquelle est réalisé ou inséré le réservoir auxiliaire (11), le côté supérieur (12a) du réservoir auxiliaire (11) s'étendant dans un plan avec la paroi périphérique (2).

2. Récipient de combustible selon la revendication 1,
**caractérisé en ce que** la cavité (10) est réalisée sur le côté supérieur (12a) de la paroi périphérique (2).

3. Récipient de combustible selon l'une quelconque des revendications 1 ou 2,
**caractérisé en ce que** le récipient de combustible (1) est réalisé de manière modulaire et au moins l'un des modules (6) est pourvu d'une cavité (10).

4. Récipient de combustible selon l'une quelconque des revendications 1 à 3,
**caractérisé en ce que** la paroi périphérique (2) est formée en métal.

5. Récipient de combustible selon l'une quelconque des revendications 1 à 3,
**caractérisé en ce que** la paroi périphérique (2) est formée en plastique.

6. Récipient de combustible selon l'une quelconque des revendications 1 à 5,
**caractérisé en ce que** le réservoir auxiliaire (11) présente un volume de 5 à 50 litres.

7. Récipient de combustible selon l'une quelconque des revendications 1 à 6,
**caractérisé en ce que** le réservoir auxiliaire (11) est réalisé pour recevoir une urée, un composant de fluide de service ou de l'eau.

8. Récipient de combustible selon l'une quelconque des revendications 1 à 7,
**caractérisé en ce que** la partie de la paroi périphérique (2) pourvue de la cavité (10) est réalisée sous forme de module en plastique séparé, lequel est inséré dans au moins un côté frontal ouvert de la paroi périphérique (2), la section arrière du module en plastique faisant saillie dans la paroi périphérique (2) et étant reliée à la paroi périphérique (2), et la section avant pourvue de la cavité (10) dépassant au-delà du côté frontal de la paroi périphérique (2).

9. Récipient de combustible selon l'une quelconque des revendications 1 à 8,
**caractérisé en ce que** le réservoir auxiliaire (11) comprend une enveloppe (12) indépendante de la paroi périphérique (2).

10. Récipient de combustible selon l'une quelconque des revendications 1 à 9,
**caractérisé en ce que** le réservoir auxiliaire (11) est formé en plastique.

11. Récipient de combustible selon l'une quelconque des revendications 1 à 10,
**caractérisé en ce que** le réservoir auxiliaire (11) présente une forme adaptée à l'au moins une cavité (10).

12. Récipient de combustible selon l'une quelconque des revendications 1 à 11,
**caractérisé en ce que** le réservoir auxiliaire (11) est relié à la paroi périphérique (2) par vissage, soudage ou collage.

13. Récipient de combustible selon la revendication 12,
**caractérisé en ce que** la paroi périphérique (2) est pourvue de goujons (20), par le biais desquels le réservoir auxiliaire (11) peut être relié à la paroi périphérique (2).

14. Récipient de combustible selon la revendication 12 ou 13,
**caractérisé en ce que** le réservoir auxiliaire (11) est pourvu de douilles métalliques (21) pour le vissage sur la paroi périphérique (2).

15. Récipient de combustible selon l'une quelconque des revendications 1 à 14,
**caractérisé en ce que** le côté supérieur (12a) du réservoir auxiliaire (11) dépasse au-delà d'un bord (14) de la cavité (10).

16. Récipient de combustible selon la revendication 15,
**caractérisé en ce que** la saillie du côté supérieur (12a) du réservoir auxiliaire (11) est reliée à la paroi périphérique (2) de manière étanche aux liquides.

17. Récipient de combustible selon l'une quelconque des revendications 1 à 14,
**caractérisé en ce qu'**un joint d'étanchéité (13) est inséré entre le réservoir auxiliaire (11) et un bord (14) de la cavité (10), lequel joint d'étanchéité empêche une infiltration de liquide dans la cavité (10).

18. Récipient de combustible selon la revendication 17,
**caractérisé en ce que** le joint d'étanchéité (13) est une bande en caoutchouc périphérique.

19. Récipient de combustible selon l'une quelconque des revendications 1 à 18,
**caractérisé en ce qu'**un recouvrement (15) est appliqué sur le côté supérieur (12a) du réservoir auxiliaire (11), lequel recouvrement dépasse au-delà du bord (14) de la cavité (10) et est relié à la paroi périphérique (2).

20. Récipient de combustible selon l'une quelconque des revendications 1 à 8,
**caractérisé en ce que** le réservoir auxiliaire (11) est formé par la cavité (10) et une plaque de fermeture (22) fermant l'ouverture de la cavité (10), la plaque de fermeture (22) étant reliée à la paroi périphérique (2) de manière étanche aux liquides.

21. Récipient de combustible selon la revendication 20,
**caractérisé en ce que** la plaque de fermeture (22) et la partie de la paroi périphérique (2) pourvue de la cavité (10) sont formées en plastique ou sont pourvues d'une couche en plastique sur le côté intérieur.

22. Utilisation d'un module d'escalier (6c) d'un récipient de combustible (1), lequel module d'escalier comprend, dans une surface latérale s'étendant essentiellement verticalement de sa paroi périphérique (2), une cavité (24) pour l'insertion de marches (9), en tant que module de réservoir auxiliaire (6d) destiné à recevoir un réservoir auxiliaire (11), le module étant inséré de manière tournée dans un récipient de combustible (1) de construction modulaire et comprenant déjà un module d'escalier (6c) pourvu de marches (9), de telle sorte que la surface latérale pourvue de la cavité (24) soit disposée sur le côté supérieur du récipient de combustible (1) et forme ainsi la cavité (10) pour le réservoir auxiliaire (11), un récipient auxiliaire (11) adapté à la forme de la cavité (10) étant inséré dans la cavité (10).
